Europäisches Patentamt

European Patent Office

Office européen des brevets

(11) Numéro de publication: **0 359 312**

**A1**

(12) # DEMANDE DE BREVET EUROPEEN

(21) Numéro de dépôt: 89202241.9

(51) Int. Cl.5: **H04N 7/01**

(22) Date de dépôt: 06.09.89

(30) Priorité: 09.09.88 FR 8811797

(43) Date de publication de la demande:
21.03.90 Bulletin 90/12

(84) Etats contractants désignés:
DE FR GB

(71) Demandeur: **LABORATOIRES D'ELECTRONIQUE PHILIPS**
**3, Avenue Descartes**
**F-94450 Limeil-Brévannes(FR)**
(84) **FR**

Demandeur: **N.V. Philips' Gloeilampenfabrieken**
**Groenewoudseweg 1**
**NL-5621 BA Eindhoven(NL)**
(84) **DE GB**

(72) Inventeur: **Lamnabhi, Moustanir Société Civile S.P.I.D.**
**209, rue de l'Université**
**F-75007 Paris(FR)**
Inventeur: **Lhuillier, Jean-Jaques Société Civile S.P.I.D.**
**209, rue de l'Université**
**F-75007 Paris(FR)**

(74) Mandataire: **Chaffraix, Jean et al**
**Société Civile S.P.I.D. 209, rue de l'Université**
**F-75007 Paris(FR)**

(54) Dispositif convertisseur de standards de télévision.

(57) Ce dispositif comporte un accès d'entrée (1, 2 et 3) pour recevoir des images conformes à un premier standard, un accès de sortie (5, 6 et 7) pour fournir des images conformes à un second standard, des organes d'interpolation compensée en mouvement (10 et 13) disposés entre les accès d'entrée et de sortie et un organe d'estimation de mouvement (12) pour fournir des indications de mouvement audit organe d'interpolation. L'organe d'interpolation est conçu pour traiter chaque pixel des images du second standard directement à partir des images du premier standard en tenant compte de l'indication de mouvement qui est attribuée à chacun desdits pixels de l'image du second standard.
Application : conversion de standard TV.

FIG.1

## Dispositif convertisseur de standards de television.

La présente invention concerne un dispositif convertisseur de standards de télévision, dispositif comportant un accès d'entrée pour recevoir des images conformes à un premier standard, un accès de sortie pour fournir des images conformes à un second standard, au moins un organe d'interpolation compensée en mouvement disposé entre les accès d'entrée et de sortie et un organe d'estimation de mouvement pour fournir des indications de mouvement audit organe d'interpolation.

De tels dispositifs sont bien connus. On pourra consulter notamment, à ce sujet, la demande de brevet européenne N° 0187641.

Pour effectuer des conversions de standards, on est confronté à un certain nombre de difficultés. D'abord les cadences d'images ainsi que le nombre de lignes peuvent être différents ; en outre, on peut avoir affaire à des images entrelacées ou non.

Dans la demande de brevet précitée, l'interpolation n'est effectuée que sur des images non entrelacées ce qui impose, lorsque le premier standard concerne des images entrelacées, de prévoir une conversion pour obtenir des images séquentielles, c'est-à-dire des images non entrelacées. Cette conversion est opérée en tenant compte simplement de la présence de mouvement global.

De ce fait, le dispositif connu risque de fournir des images dans le second standard qui n'ont pas toujours une qualité suffisante.

Le but de l'invention est de proposer un dispositif de ce genre qui offre des images converties de meilleure qualité, sans nécessiter de conversion préalable lorsque le premier standard présente des images entrelacées.

Pour cela, un tel dispositif est remarquable en ce que au moins l'un des organes d'interpolation est conçu pour traiter chaque pixel des images du second standard directement à partir des images du premier standard en tenant compte de l'indication de mouvement qui est fournie par l'organe d'estimation de mouvement prévu pour attribuer une indication de mouvement à chacun desdits pixels de l'image du second standard.

Selon une caractéristique importante de l'invention, un dispositif convertisseur de standards est remarquable en ce qu'il comporte, en outre un organe abaisseur de définition relié aux accès d'entrée pour fournir des informations d'images à l'organe d'estimation de mouvement.

Cette caractéristique amène l'avantage que les calculs pour déterminer l'indication de mouvement sont effectués sur des images comportant moins de pixels et de ce fait, deviennent notablement moins importants sans pour cela que la qualité des images converties en souffre.

La description suivante, accompagnée des dessins ci-annexés, le tout donné à titre d'exemple non limitatif, fera bien comprendre comment l'invention peut être réalisée.

La figure 1 représente un schéma d'un dispositif convertisseur de standards conforme à l'invention.

La figure 2 est un schéma utilisé pour l'explication de l'interpolation d'images dans le temps.

Les figures 3a et 3b montrent la disposition des pixels environnant un point d'image à interpoler.

La figure 4 représente le détail d'un organe de filtrage d'interpolation faisant partie du dispositif conforme à l'invention.

La figure 5 représente le gabarit de filtrage apporté par l'organe de la figure 4.

La figure 6 représente le schéma d'un premier organe abaisseur de définition convenant pour l'invention.

La figure 7 montre la disposition des lignes à élaborer par l'organe abaisseur de définition de la figure 6.

La figure 8 montre le spectre dans le domaine vertico-temporel des signaux du premier standard.

La figure 9 représente l'allure du gabarit de filtrage apporté par l'organe abaisseur de définition.

La figure 10 montre une décomposition en deux parties du gabarit de la figure 9.

La figure 11 montre un exemple de réalisation du filtrage.

La figure 12 montre la constitution de l'organe d'estimation de mouvement.

La figure 13 montre comment est effectuée l'attribution du vecteur mouvement.

La figure 14 montre un mode de réalisation des organes d'interpolation.

La figure 15 montre la structure d'un organe abaisseur de définition convenant pour un premier standard de format séquentiel.

La figure 16 montre le filtrage apporté par l'organe de la figure 15.

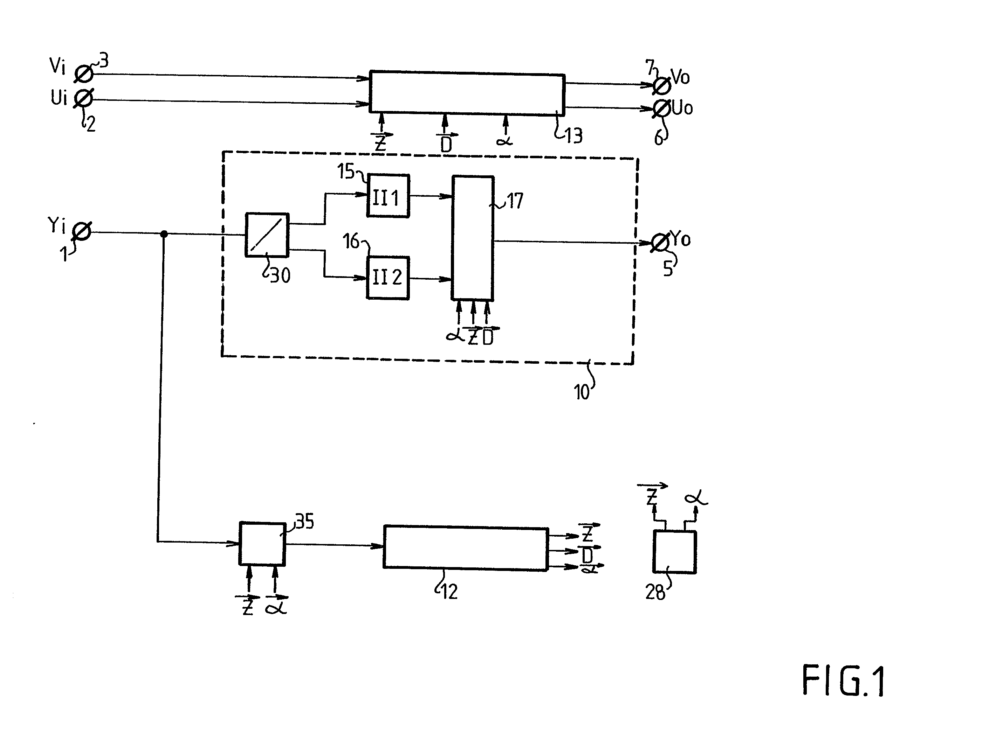

A la figure 1, on a représenté schématiquement un convertisseur de standards conforme à l'invention. Aux accès d'entrée 1, 2 et 3 sont respectivement appliqués les signaux de luminance $Yi$ et les signaux de différence de couleur $Ui$ et $Vi$ se présentant en conformité aux normes d'un premier standard de télévision, ce premier standard impliquant une première cadence d'images, un premier nombre de lignes par image et un format d'entrelacement. Ce qu'on entend par format d'entrelacement est la possibilité d'avoir des images entrelacées ou pas. Aux accès de sortie 5, 6 et 7 les signaux de luminance Yo et de différence de couleur Uo et Vo sont rendus disponibles en conformité avec un second standard de télévision, c'est-à-dire un standard présentant une seconde cadence d'images, un second nombre de lignes et un second format d'entrelacement. Un organe d'interpolation compensée en mouvement 10 fournit les signaux Yo en tenant compte d'un vecteur de mouvement $\vec{D}$ constituant ladite indication de mouvement. Ce vecteur $\vec{D}$ est déterminé par l'organe d'estimation de mouvement 12. Les signaux de différence de couleur sont aussi interpolés par un organe d'interpolation 13 qui leur est propre et qui sera décrit plus en détail par la suite.

Conformément à l'invention, cette interpolation est effectuée directement sur la base du pixel à fournir pour le second standard à partir d'images du premier standard contenues dans des mémoires tampons 15 et 16 faisant partie de l'organe 10 ; la mémoire 15 contient les pixels appartenant à une première image II1 du premier standard et la mémoire 16 les pixels de l'image suivante II2, tandis que l'organe d'estimation de mouvement 12 fournit des vecteurs $\vec{D}$ établis pour chacun des pixels du second standard.

Dans ce qui suit, on fait intervenir un vecteur $\vec{Z}$ qui représente les coordonnées d'un point sur les différentes images. Ainsi, pour un point $\vec{Z}$ correspondant à un pixel de l'image I0 du second standard vont correspondre dans les images II1 et II2 des points M1 et M2 de coordonnées :

$$\vec{Z} - \alpha\vec{D}$$
$$\vec{Z} + (1-\alpha)\vec{D}$$

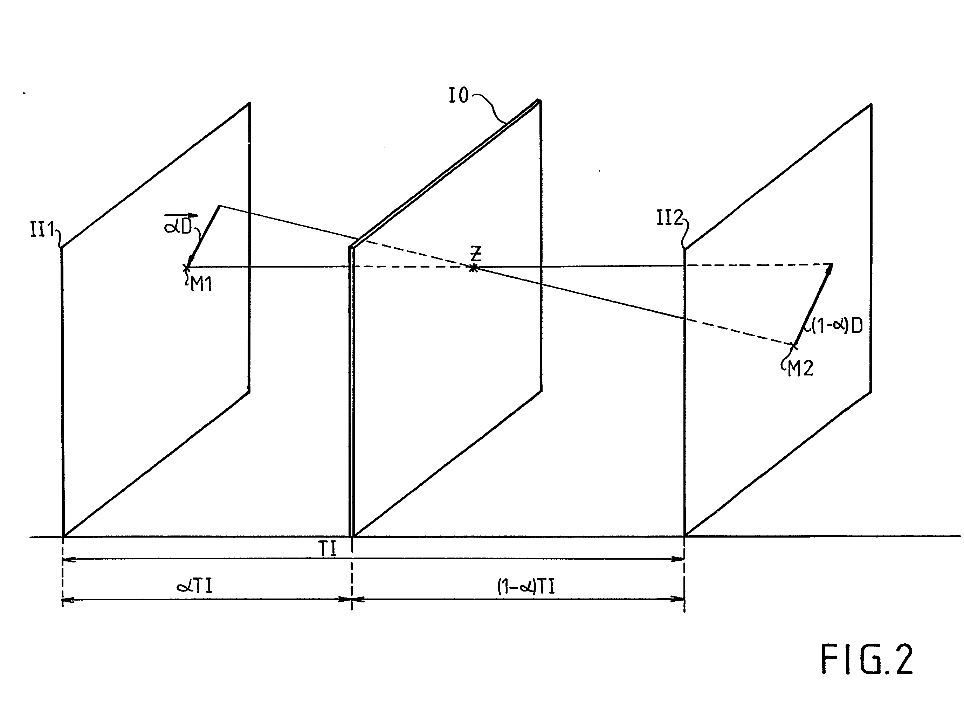

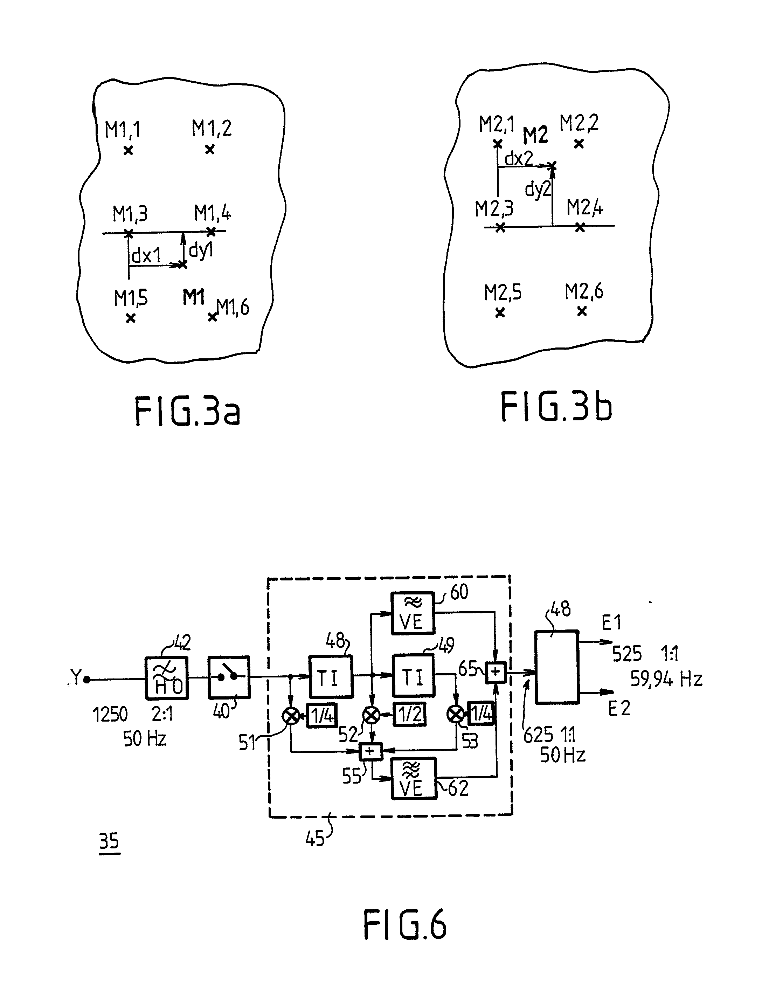

où $\alpha$ détermine l'emplacement temporel de l'image I0 à interpoler ; ceci est représenté à la figure 2. La valeur $\alpha$ inférieure à 1, fixe l'emplacement de cette image I0 par rapport aux images II1 et II2 séparées d'un laps de temps égal à TI. L'image I0 est placée au temps $\alpha$TI après l'image II1 et à un temps $(1-\alpha$TI$)$ avant l'image II2. Les points M1 et M2 ne correspondent pas forcément à des pixels dans ces images II1 et II2. Aussi un organe de filtrage d'interpolation 17 va affecter une valeur de luminance Yo(Z) au point $\vec{Z}$ à partir des pixels appartenant aux images II1 et II2. On se rapporte aux figures 3a et 3b relatives respectivement aux points M1 et M2. Cette luminance est établie en considérant les pixels entourant les points M1 et M2. Les pixels entourant le point M1 sont référencés par M1,1 M1,2 M1,3 M1,4 M1,5 et M1,6 et leur luminance respective par Y(M1,1) Y(M1,2) Y(M1,3) Y(M1,4) Y(M1,5) et Y(M1,6). D'une manière similaire, les pixels entourant le point M2 portent les références M2,1 M2,2 M2,3 M2,4 M2,5 et M2,6, leur luminance associée : Y(M2,1) Y(M2,2) Y(M2,3) Y(M2,4) Y(M2,5) et Y(M2,6). Les distances dy1 et dy2 sont définies par rapport aux horizontales menées par les points M1,3 et M1,4 en ce qui concerne l'image II1 et les points M2,3 et M2,4 en ce qui concerne l'image II2. Les valeurs dy1 et dy2 peuvent être positives ou négatives selon que M1 ou M2 se trouve au-dessus ou au-dessous desdites horizontales. Les distances dx1 et dx2, comptées positivement, sont définies par rapport aux verticales passant par M1,1 M1,3 et M1,5 et par M2,1 M2,3 et M2,5 respectivement.

Toutes les distances dx1, dx2, dy1 et dy2 représentent une fraction de la distance horizontale et verticale qui sépare les pixels et leur valeur absolue est inférieure ou égale à "1"

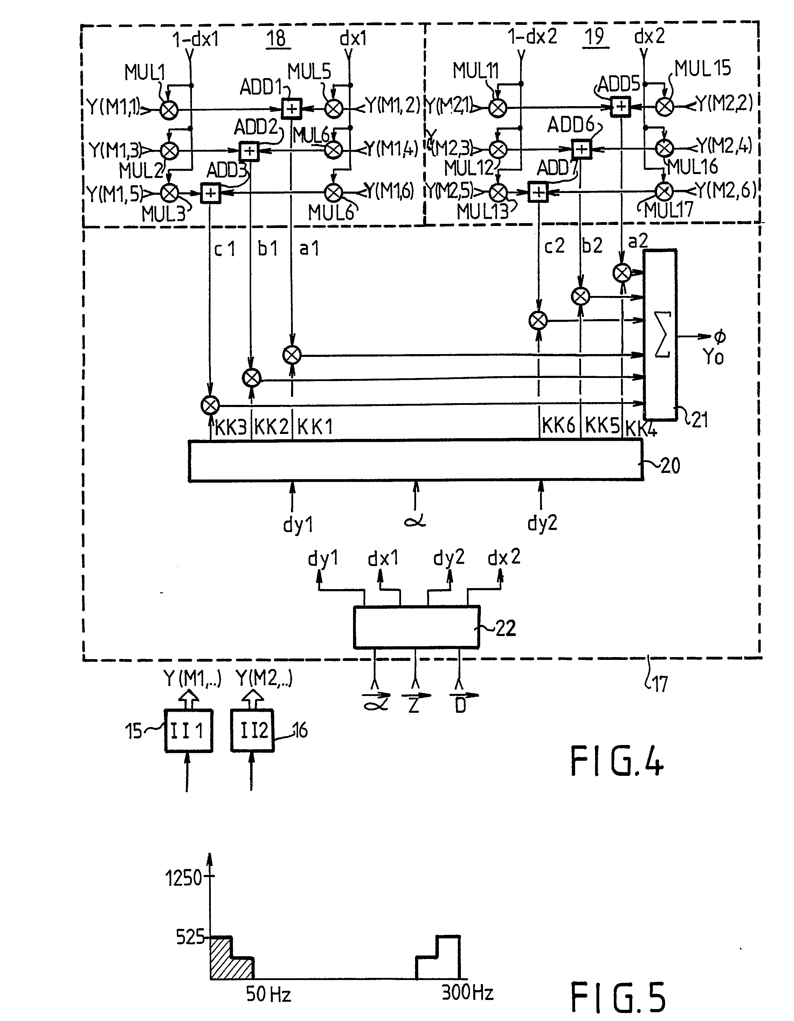

Pour effectuer ces interpolations l'organe de filtrage d'interpolation 17, montré en détail à la figure 4, comporte tout d'abord deux circuits d'interpolation horizontale 18 et 19. Le circuit 18 fournit des signaux de luminance a1, b1 et c1 à partir des signaux y(M1,1) à y(M1,6) provenant de la mémoire 15. Ces signaux sont tels que :

a1 = (1-dx1).Y(M1,1) + dx1.Y(M1,2)
b1 = (1-dx1).Y(M1,3) + dx1.Y(M1,4)
c1 = (1-dx1).Y(M1,5) + dx1.Y(M1,6)

Ceci est obtenu par les multiplieurs MUL1, MUL2 et MUL3 qui multiplient par 1-dx1 les signaux y-(M1,1) Y(M1,3) et Y(M1,5), par les multiplieurs MUL5, MUL6 et MUL7 qui multiplient par dx1 les signaux Y(M1,2) Y(M1,4) et Y(M1,6) et par les additionneurs ADD1 ADD2 et ADD3 qui somment les résultats des multiplieurs. Le circuit d'interpolation horizontale 19 fournit des signaux de luminance a2, b2 et c2 à partir des signaux y(M2,1) à Y-(M2,6) provenant de la mémoire 16 selon les formules :

a2 = (1-dx2).Y(M2,1) + dx2.Y(M2,2)
b2 = (1-dx2).Y(M2,3) + dx2.Y(M2,4)
c2 = (1-dx2).Y(M2,5) + dx2.Y(M2,6)

Ceci est obtenu par les multiplieurs MUL11, MUL12 et MUL13 qui multiplient par 1-dx2 les signaux Y(M2,1) Y(M2,3) et Y(M2,5), par les multiplieurs MUL15, MUL16 et MUL17 qui multiplient par dx2 les signaux Y(M2,2) Y(M2,4) et Y(M2,6) et par les additionneurs ADD5, ADD6 et ADD7 qui somment les résultats des multiplieurs MUL11 et MUL15, MUL12 et MUL16, MUL13 et MUL17 afin de fournir les signaux a2, b2 et c2. Un circuit de coefficients 20 fournit différents coefficients KK1 à KK6 et coopère avec un circuit d'addition 21 pour fournir le signal Yo tel que :

Yo

= KK1.a1 + KK2.b1 + KK3.c1 + KK4.a2 + KK5.b2 + K-K6.c2     (1)

Les coefficients KK1 à KK6 dépendent des grandeurs dy1, $\alpha$, dy2. Ces coefficients doivent garantir un gabarit de filtrage tel que montré à la figure 5, c'est-à-dire un filtre qui laisse passer notamment des détails verticaux dont la définition est inférieure à une fréquence correspondant à 525 lignes et des détails temporels inférieurs à 50 Hz.

Un organe de calcul 22 élabore les différentes grandeurs dy1. dx1, dy2 et dx2 utiles pour l'interpolation à partir de $\alpha$, $\vec{Z}$ et $\vec{D}$.

La formule (1) ci-dessus représente en fait une double interpolation :
- une interpolation vertico-temporelle où les luminances Y(M1) et y(M2) des points M1 et M2 sont des fonctions f1 et f2 de paramètres indiqués ci-dessous :

$Y(M1) = f1(a1, b1, c1, a2, b2, c2, dy1)$

$Y(M2) = f2(a1, b1, c1, a2, b2, c2, dy2)$

- une interpolation temporelle fonction de $\alpha$ :

$Yo = (1-\alpha).Y(M1) + \alpha Y(M2)$

c'est-à-dire une fonction g impliquant les paramètres indiqués ci-dessous :

$Yo = g(a1, b1, c1, a2, b2, c2, dy1, dy2, \alpha)$

Ces notions d'interpolation sont données dans l'article "Adaptive Filtering for Improved Standard Conversion" paru dans : 2nd INTERNATIONAL WORKSHOP ON SIGNAL PROCESSING OF HDTV, L'AQUILA - ITALY (29 fév. - 2 Mar.1988).

La grandeur $\vec{D}$ est élaborée par l'organe d'estimation de mouvement 12. Cet organe fournit aussi les valeurs $\vec{Z}$ et $\alpha$ rattachées à $\vec{D}$. Une base de temps 28 (figure 1) impose à l'organe d'estimation de mouvement 12 de traiter les points M correspondant aux pixels des images du second standard.

Un organe de changement de cadences 30 fournit des informations d'images aux mémoires tampons 15 et 16 à la cadence des images du second standard de sorte que l'interpolation s'effectue systématiquement avec les informations contenues dans ces mémoires tampons 15 et 16.

Pour éviter trop de calculs, l'invention propose d'effectuer les estimations de mouvement sur des images à définition et de format réduits. Un organe abaisseur de définition 35 est inséré entre l'accès d'entrée 1 et l'organe d'estimation de mouvement 12.

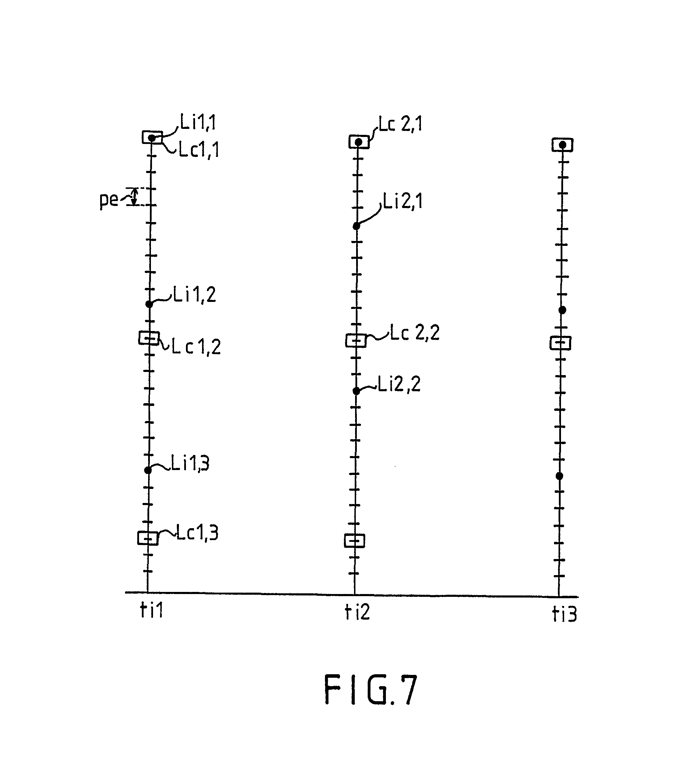

A la figure 6, on a représenté un organe abaisseur de définition 35 convenant pour un dispositif convertisseur de standards destiné à convertir un standard de 1250 lignes relatif à des images entrelacées à la cadence de 50 images par seconde vers un second standard de 525 lignes relatif à des images non-entrelacées mais cette fois-ci à la cadence de 59,94 images par seconde. Cet organe 35 est tout d'abord constitué par un organe de déc'nation horizontale 40 qui prélève un point sur deux des images du premier standard. Ce prélèvement est effectué après filtrage opéré par un filtre horizontal 42 afin d'éviter les phénomènes de repliement de spectre. Un organe de filtrage vertico-temporel 45 transforme les images entrelacées en images séquentielles et réalise le changement du nombre de lignes pour passer de 1250 lignes à 625. Un organe de changement de cadences 48 fournit deux images consécutives E1 et E2 à l'organe d'estimation de mouvement 12 ; les images E1 et E2 sont des images séquentielles avec 525 lignes à la cadence de 59,94 images par seconde.

L'organe de filtrage vertico-temporel 45 comporte tout d'abord deux éléments de retard 48 et 49 montés en cascade et amenant chacun un retard égal à TI. L'entrée de l'élément 48 est reliée à la sortie de l'organe de décimation 40. A la sortie de l'organe 40 est aussi connectée l'entrée d'un multiplieur 51 qui multiplie par un facteur 1/4 les échantillons de luminance à l'entrée de l'élément 48 ; un deuxième multiplieur 52 multiplie par un facteur 1/2 les échantillons à la sortie de l'élément 48 ; enfin un troisième multiplieur 53 multiplie par un facteur 1/4 les échantillons présents à la sortie de l'élément 49. Un additionneur 55 somme les différents résultats de ces multiplieurs 51, 52 et 53. A la sortie de l'élément 48 est connectée l'entrée d'un filtre vertical passe-bas 60. Ce filtre est dit vertical car il a pour but de traiter les lignes de pixels. La sortie de l'additionneur 55 est reliée à l'entrée d'un autre filtre vertical 62 mais celui-ci est du type passe-bande. Un additionneur 65 somme les signaux de sortie des filtres verticaux 60 et 62. La sortie de cet additionneur 65 constitue la sortie de l'organe de filtrage vertico-temporel 45.

La conception d'un tel organe abaisseur de définition repose sur les considérations suivantes en ce qui concerne le domaine vertico-temporel, le nombre de points par ligne étant supposé identique.

On se reporte à la figure 7 où l'on a représenté aux instants ti1, ti2, ti3,... l'apparition des images du premier standard. Les petits cercles noirs référencés Li1,1 Li1,2 Li1,3,... pour l'image surgissant à l'instant ti1, par Li2,1... pour l'image de l'instant ti2,..., indiquent la trace des lignes du premier standard dans un plan qui leur est perpendiculaire. Les petits carrés blancs référencés par Lc1,1 Lc1,2 Lc1,3... pour l'image de l'instant ti1 et par Lc2,1 Lc2,2 de l'image à l'instant ti2 représentent dans un plan qui leur est perpendiculaire, les lignes à construire pour des images à définition abaissée utilisables par l'organe d'estimation de mouvement 12. On remarquera sur cette figure 7 que les lignes Li1,1 et Lc1,1 sont confondues et que la distance séparant les lignes de chaque image du premier standard est divisée en 10 parties égale "pe" de sorte que la ligne Lc1,2 se trouve à 12 "pe" de la ligne Li1,1 et la ligne Lc1,3 à 24 "pe". Les lignes Lci,n de l'image se trouvent sur la graduation "pe" donnant l'entier EL le plus proche de la division :

$EL = 10.[(n-1).625]/525$

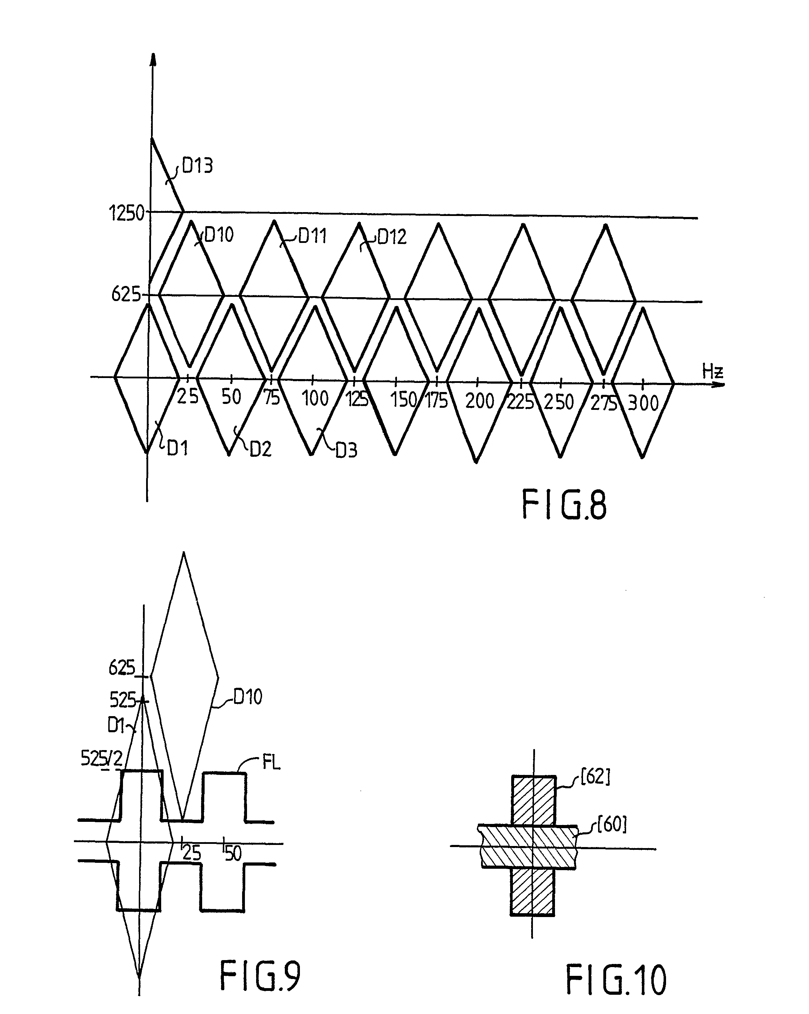

Les lignes Lci,n sont interpolées au moyen des filtres 60 et 62 qui évitent les phénomènes de repliement de spectres, compte tenu du spectre vertico-temporel résultant de l'entrelacement du premier standard. L'allure de ce spectre est représentée à la figure 8. Ce spectre est formé de losanges entrelacés. Une première série de losanges D1, D2, D3... est centrée sur l'axe horizontal aux points correspondant à 0 Hz, 50 Hz, 100 Hz. Une deuxième série comportant les losanges D10, D11... est centrée sur l'axe horizontal passant à la fréquence lignes correspondant à 625 et aux points 25 Hz, 75 Hz... On a aussi représenté une troisième série de losanges D20, D21... centrée sur un axe passant à la fréquence lignes correspondant à 1250 et aux points 0 Hz, 50 Hz... Il va de soi que tous ces losanges "pavent" tout l'espace représenté.

La figure 9 donne le gabarit du filtrage apporté par l'organe 45. Ce filtrage doit éliminer la présence néfaste de la deuxième série de losanges D10, D11, D12,... et aussi couper la partie de spectre supérieure à (525/2) lignes. La caractéristique du filtrage effectué par les filtres 60 et 62 est référencée par FL à la figure 9. Cette caractéristique de filtrage en forme de créneaux est le résultat combiné des actions des organes de filtrage 60 et 62 coopérant avec l'action du filtrage temporel réalisé par les éléments 48, 49, 51, 52, 53 et 55. Le premier organe 60 effectue une opération de filtrage passe-bas et le second organe 62 une opération de filtrage passe-bande.

La figure 10 a pour but de bien montrer l'action de ces filtres. On doit bien remarquer que le filtre 60 travaille sur des images entrelacées, les mêmes qu'à l'entrée de l'organe 45 mais retardées d'un temps TI apporté par l'élément 48 tandis que l'organe 62 travaille avec des images séquentielles obtenues à la sortie de l'additionneur 55.

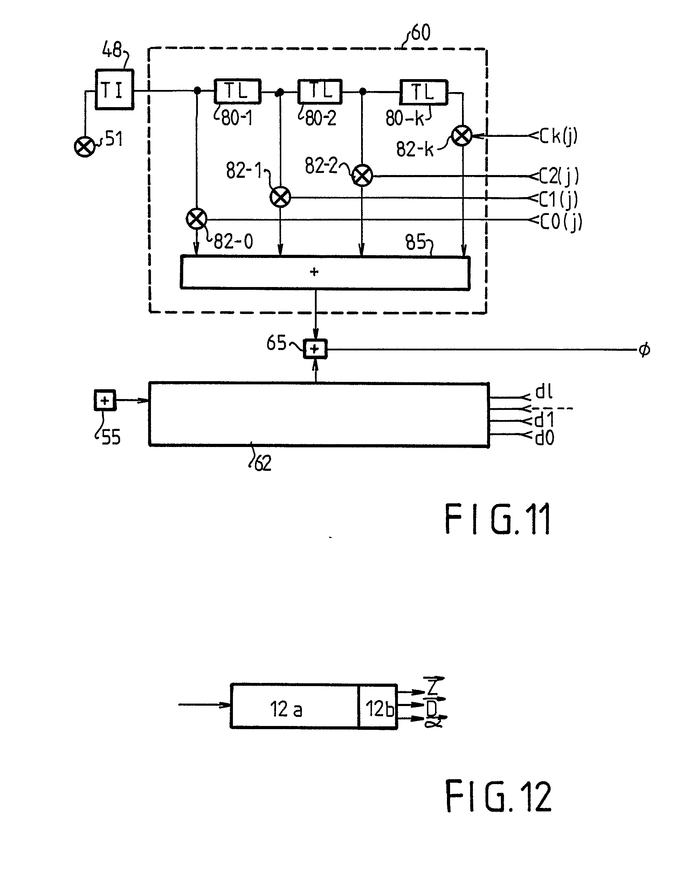

La structure de ces organes de filtrage 60 et 62 est la même et à la figure 11, on a seulement détaillé la structure de l'organe 60. Cet organe est formé à partir d'une cascade d'éléments de retard 80-1, 80-2,..., 80-k amenant chacun un retard TL égal à la durée d'une ligne. Cette cascade coopère avec des multiplieurs 82-0, 82-1, 82-2,... 82-k qui multiplient par différents coefficients c0, c1, c2,... ck les échantillons de luminance présents à l'entrée de l'élément 80-1 et aux sorties des éléments 80-1 à 80-k. Un additionneur 85 effectue la somme des résultats effectués par ces multiplieurs. Le choix des coefficients donne la caractéristique de filtrage souhaitée. L'organe de filtrage 62 ne diffère donc dans sa structure que par le nombre et la valeur de ses coefficients d0, d1, d2,... dl de façon à obtenir la fonction de filtrage passe-bande désirée. La valeur de ces coefficients dépend de la valeur "j" de la ligne à fournir Lci,j. Cependant par suite de l'interpolation toutes les lignes à la sortie de l'additionneur 65 ne doivent pas être considérées puisque celles-ci surgissent à la même cadence que les lignes d'entrée alors qu'un nombre moindre est souhaité ; il va donc se mêler des lignes parasites supplémentaires non significatives qu'il est facile d'éliminer car elles sont fonction de leurs positions qui sont connues à l'avance ; l'organe 48 effectue cette élimination.

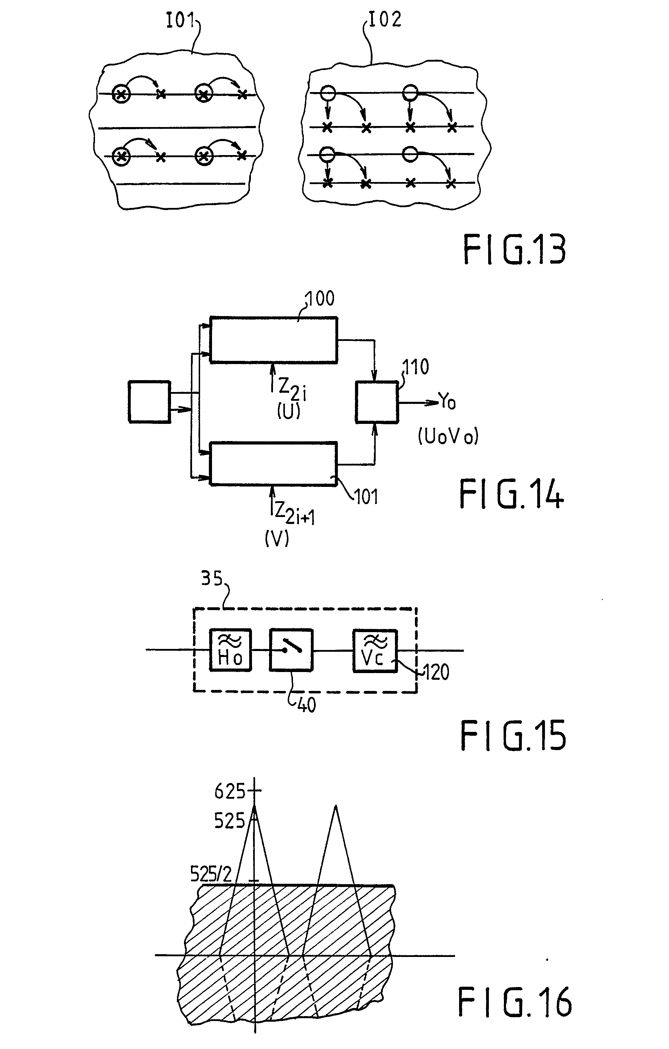

A la figure 12, on a représenté l'organe d'estimation de mouvement 12. Cet organe est formé de deux parties : 12a et 12b. La partie 12a a déjà été décrite dans la demande de brevet français N° 88 05 775 déposée le 29 avril 1988 au nom de la demanderesse. Il doit être aussi noté que cette demande donne toutes indications en ce qui concerne la structure et le fonctionnement des organes changeurs de cadences 30 et 48 notamment. Comme cette partie 12a traite des images à définition réduite, on lui a adjoint une partie 12b d'attribution d'indication de mouvement pour tous les points du second standard. C'est-à-dire qu'on va donner un vecteur $\vec{D}$ pour chaque point $\vec{Z}$ des images. La façon dont est attribuée l'indication de mouvement, est schématisée à la figure 13. Sur cette figure les ronds représentent les points auxquels sont affectés un vecteur déplacement, les croix représentent, elles, les pixels du second standard. Comme ce second standard implique des images entrelacées, il faut distinguer les deux cas que posent deux images consécutives IO1 et IO2. Pour l'image IO1 les points affectés d'une indication de mouvement correspondent à un pixel sur deux. La partie 12b va attribuer à deux pixels successifs la même indication de mouvement. Pour l'image IO2, les points pour lesquels on a l'indication de mouvement ne correspondent pas aux pixels des images de ce second standard. On prend pour le pixel du standard de sortie, le vecteur de mouvement du pixel qui est situé au-dessus, s'il existe. S'il n'existe pas, le mouvement attribué est celui du pixel précédent à la même ligne. Ceci est représenté par des flèches à la figure 13.

A la figure 14, on a représenté un mode de réalisation préféré des organes d'interpolation 10 et 13. Ces organes sont composés de deux branches d'interpolation 100 et 101. La branche 100 effectue pour l'organe d'interpolation 10 les interpolations relatives aux pixels pairs Z(2i) des images du second standard et la branche 101, les interpolations relatives aux pixels impairs Z(2i + 1). Une mémoire tampon de sortie 110 combine ces pixels pairs et impairs.

La structure de l'organe d'interpolation 13 est la même mais il faut noter que la branche 100 effectuera les calculs d'interpolation pour les signaux de différence de couleur U tandis que la branche 101 effectuera les calculs concernant les signaux de différence de couleur V.

Les principes de la présente invention s'appliquent aussi lorsque le premier standard est un standard de format séquentiel à 1250 lignes 1:1 50 Hz. Dans ce cas, l'organe abaisseur de définition 35 montré à la figure 15 n'effectue qu'une opération de filtrage vertico-temporel passe-bas, apporté par un organe de filtrage 120 interconnectant l'organe de décimation 40 avec là sortie de l'organe abaisseur de définition 35.

En effet, si on se reporte à la figure 16 qui représente le spectre des signaux de ce premier standard non entrelacé, on se rend compte que la deuxième série de losanges D10, D11,... de la figure 8 n'existe plus ici.

## Revendications

1. Dispositif convertisseur de standards de télévision, dispositif comportant un accès d'entrée pour recevoir des images conformes à un premier standard, un accès de sortie pour fournir des images conformes à un second standard, au moins un organe d'interpolation compensée en mouvement disposé entre les accès d'entrée et de sortie et un organe d'estimation de mouvement pour fournir des indications de mouvement audit organe d'interpolation, caractérisé en ce que au moins l'un des organes d'interpolation est conçu pour traiter chaque pixel des images du second standard directement à partir des images du premier standard en tenant compte de l'indication de mouvement qui est fournie par l'organe d'estimation de mouvement prévu pour attribuer une indication de mouvement à chacun desdits pixels de l'image du second standard.

2. Dispositif convertisseur de standards selon la revendication 1, caractérisé en ce qu'il comporte, en outre, un organe abaisseur de définition relié aux accès d'entrée pour fournir des informations d'images à l'organe d'estimation de mouvement.

3. Dispositif convertisseur de standards selon la revendication 2, caractérisé en ce qu'il est prévu un organe changeur de cadences d'images disposé à l'entrée de l'organe abaisseur de définition tandis qu'un deuxième organe changeur de cadences est disposé à l'entrée des organes d'interpolation.

4. Dispositif convertisseur de standards selon l'une des revendications 1 à 3, caractérisé en ce qu'un organe d'attribution de mouvement est adjoint à l'organe d'estimation de mouvement pour attribuer une indication de mouvement à chaque pixel des images du second standard à partir des informations de mouvement établies par l'organe d'estimation de mouvement.

FIG.1

EP 0 359 312 A1

1-VIII-PHF 88-589

FIG.2

EP 0 359 312 A1

FIG.3a

FIG.3b

FIG.6

FIG.4

FIG.5

4-Ⅷ-PHF 88-589

FIG.7

FIG.8

FIG.9

FIG.10

FIG.11

FIG.12

I01

I02

FIG.13

100

110

$Z_{2i}$
(U)

Yo

(UoVo)

101

$Z_{2i+1}$
(V)

FIG.14

35

Ho

Vc

120

40

FIG.15

625
525

525/2

FIG.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 162 018 (KOKUSAI DENSHIN DENWA CO.)<br>* En entier *<br>--- | 1 | H 04 N 7/01 |
| X | SIGNAL PROCESSING, vol. 11, no. 4, décembre 1986, pages 387-404, Elsevier Science Publishers B.V., Amsterdam, NL; M. BIERLING et al.: "Motion compensating field interpolation using a hierarchically structured displacement estimator"<br>* Page 388, colonne de droite, ligne 41 - page 390, colonne de gauche, ligne 4; page 394, colonne de gauche, ligne 4 - page 394, colonne de droite, ligne 2; page 395, colonne de gauche, lignes 19-29 *<br>--- | 1,2 | |
| X | FERNSEH & KINO TECHNIK, vol. 42, no. 4, avril 1988, pages 177-178,180-184, Heidelberg, DE; G. HOLOCH: "Aspekte der Normwandlung von HDTV in bestehende Fernsehstandards"<br>* Page 180, colonne de droite, ligne 9 - page 181, colonne de gauche, ligne 1; page 181, colonne de gauche, ligne 33 - page 181, colonne du milieu, ligne 9 * | 1,4 | |
| A· | IDEM<br>---                                                    -/- | 2 | |

_Domaines techniques recherchés:_

DOMAINES TECHNIQUES RECHERCHES (Int. Cl.5)

H 04 N

Le présent rapport a été établi pour toutes les revendications

| Lieu de la recherche | Date d'achèvement de la recherche | Examinateur |
|---|---|---|
| LA HAYE | 13-12-1989 | BOSCH F.M.D. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | SIGNAL PROCESSING OF HDTV, l'Aquila, 29 février - 2 mars 1988, pages 449-458, Elsevier Science Publishers B.V., North-Holland, NL; M. ERNST et al.: "Adaptive filtering for improved standards conversion" * Page 449, ligne 1 - page 450, ligne 2; figures 1-5 * | 1,2,4 | |
| A | ICC'86 - INTEGRATING THE WORLD THROUGH COMMUNICATIONS, Toronto, 22-25 juin 1986, vol. 2/3, pages 1280-1284, IEEE, New York, US; Y. NINOMIYA et al.: "A motion vector detector for MUSE encoder" * Page 1280, colonne de droite, ligne 33 - page 1281, colonne de gauche, ligne 22 * | 2 | |
| P,X | EP-A-0 294 962 (SONY CORP.) * Page 4, lignes 46-51; page 6, ligne 21 - page 7, ligne 7; page 8, lignes 53-56 * | 1,2,4 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 13-12-1989 | BOSCH F.M.D. |